# EUROPÄISCHE PATENTSCHRIFT

(11) **EP 2 295 223 B1**
(45) Veröffentlichungstag und Bekanntmachung des Hinweises auf die Patenterteilung: **25.02.2015**
(21) Anmeldenummer: 10175116.2
(22) Anmeldetag: 02.09.2010
(51) Int. Cl.: B29C 49/42, B29C 49/48, B29C 33/72

(54) **Magazinvorrichtung mit Reinigungseinrichtung sowie Verfahren zur Aufbewahrung von Blasformen**
Cartridge device with cleaning device and process for storing blow moulds
Dispositif de cartouche doté d'un dispositif de nettoyage et procédé pour stocker des moules de soufflage

(30) Priorität: 11.09.2009 DE 102009040978
(43) Veröffentlichungstag der Anmeldung: 16.03.2011
(73) Patentinhaber: Krones AG, 93073 Neutraubling (DE)
(72) Erfinder: Seger, Martin, 92318 Neumarkt i. d. Opf. (DE)
(74) Vertreter: Hannke, Christian

(56) Entgegenhaltungen:
- EP-A1- 2 030 759
- FR-A1- 2 711 629
- JP-A- 2004 018 239
- US-A- 5 791 852

## Beschreibung

Die vorliegende Erfindung bezieht sich auf eine Magazinvorrichtung zur Aufbewahrung von Blasformen. Derartige Blasformen werden im Stand der Technik verwendet, um Kunststoffvorformlinge üblicherweise im Rahmen eines Blasprozesses zu Kunststoffbehältnissen insbesondere PET-Flaschen umzuformen. Dabei ist es bisweilen nötig, diese Blasformen auszuwechseln beispielsweise wenn andere Flaschenformate geblasen werden sollen. Die nicht verwendeten Blasformen werden üblicherweise in Magazinen aufbewahrt, wobei hierzu die Blasformen in ihre Einzelteile wie beispielsweise zwei Seitenteile und ein Bodenteil zerlegt werden und in einen entsprechenden Aufnahmebehälter untergebracht werden. Ebenso können die sog. Reckstangen mit in diesem Aufnahmebehälter deponiert werden. Im erweiterten Sinn gehören auch die Reckstangen zu den Blasformen und werden in der weiteren Beschreibung nicht mehr extra aufgeführt. Daneben können auch weitere Bestandteile, welche zum Umformen von Kunststoffvorformlingen zur Kunststoffbehältnissen erforderlich sind, wie etwa Greifelemente untergebracht werden.

Aus der WO 2009/018952 A2 ist eine derartige Blasmaschine für Behälter bekannt. Diese weist eine Dornhalter - tragende Förderstrecke und an den Dornhalten mittels lösbarer Kupplungen tauschbar angebrachte Preformdorne auf wobei jede Kupplung einen Dornklemmmechanismus und ein von außen zugängliches mindestens relativ zum Dornhalter verstellbares Löseelement aufweist.

Aus der EP 0 572 107 B1 ist ein Arbeitskopfwechsler für ein Rotationssystem zur Behandlung von Behältnissen bekannt. Aus der US 5 791 852 A ist ein mit einer Presse verbundenes Lagersystem zum Lagern von Pressformen bzw. Matrizen mit einer Vielzahl von Lagerbereichen bekannt.

Aus der EP 2 030 759 A1 ist Wechselautomat bekannt, der den Wechsel von Gamiturteilen einer Blasmaschine ermöglichen kann und zudem ein Magazin aufweist, um entnommene bzw. einzusetzende Garniturteile zu lagern.

Aus der JP 2004 018239 A ist eine Magazinvorrichtung zur Reinigung und Aufbewahrung von Formen bekannt.

Aus der EP 2 292 402 A2 der Anmelderin ist eine Magazinvorrichtung für Blasformen bekannt.

Der vorliegenden Erfindung liegt die Aufgabe zugrunde, insbesondere Wechselzeiten für Blasformen zu verringern und auch derartige Blasformenwechsel einfacher zu gestalten. Dies wird erfindungsgemäß durch eine Magazinvorrichtung nach Anspruch 1 erreicht. Vorteilhafte Ausführungsformen und Weiterbildungen sind Gegenstand der Unteransprüche.

Eine erfindungsgemäße Magazinvorrichtung zur Aufbewahrung einer Vielzahl von Blasformen außerhalb eines Arbeitsbetriebs der Blasformen, wobei die Blasformen zur Umformung von Kunststoffvorformlingen zu Kunststoffbehältnissen dienen und jeweils mehrteilig aufgebaut sind, weist erfindungsgemäß eine Reinigungseinrichtung zum Reinigen wenigstens eines Bereichs der in einem Lagerungszustand in der Magazinvorrichtung Blasformen auf.

Im Stand der Technik werden üblicherweise die Blasformen in Einzelteilen entnommen, anschließend manuell durch den Benutzer in Einzelteilen gereinigt und schließlich gereinigt in einem Magazin abgelegt. Erfindungsgemäß wird daher vorgeschlagen, eine Magazinvorrichtung zur Verfügung zu stellen, welche zur Aufbewahrung dieser Blasformen dient, wobei in diese Magazinvorrichtung unmittelbar eine Reinigungseinrichtung zum Reinigen der Blasformen integriert ist. Auf diese Weise kann ein Reinigungsvorgang direkt in einer Magazinvorrichtung durchgeführt werden, wodurch die Handhabung der Blasformen für den Benutzer vereinfacht wird.

Vorteilhaft weist die Magazinvorrichtung eine Vielzahl von Aufnahmemitteln auf, um die einzelnen Blasformen getrennt voneinander aufzunehmen, wobei vorteilhaft die Aufnahmemittel derart ausgebildet sind, dass die Blasformen vereinzelt von ihnen aufnehmbar sind.

Bei einer weiteren vorteilhaften Ausführungsform ist die Reinigungseinrichtung auch dazu geeignet, weitere Elemente einer Blasstation zum Umformen von Kunststoffvorformlingen zu Kunststoffbehältnissen, wie beispielsweise Reckstangen zu reinigen.

Vorzugsweise handelt es sich bei den Aufnahmemitteln um Haltemittel, die in Eingriff mit wenigstens einem Bereich der Blasformen stehen, um so einen stabilen Halt der Blasformen zu ermöglichen.

Bevorzugt werden die Blasformen in einen zumindest teilweise zusammengesetzten Zustand von den Aufnahmemitteln aufgenommen.

Während im Stand der Technik, wie oben erwähnt, die Blasformen in Einzelteilen in Magazinen abgelegt werden wird daher hier vorteilhaft vorgeschlagen, die Blasformen zumindest teilweise zusammengesetzt in dem Magazin an oder in entsprechenden Aufnahmemitteln anzuordnen. Bei diesen Aufnahmemitteln kann es sich dabei sowohl um Aufnahmemittel im engeren Sinne handeln, welche die Blasformen greifen, als auch beispielsweise um Stauräume bzw. Aufnahmetaschen, die jeweils zur getrennten Aufnahme von den Blasformen geeignet sind.

Unter teilweise zusammengesetzt wird verstanden, dass eine vorgegebene geometrische Beziehung zwischen den einzelnen Teilen der Blasformen besteht. So können beispielsweise die Seitenteile der Blasform aneinander angeordnet werden und bevorzugt auch noch ein Bodenteil in diese Blasform eingehängt sein. Durch das erfindungsgemäße Magazin wird erreicht, dass bei einem Wiedereinsetzen der Blasformen nicht zunächst die Einzelteile zusammengesucht werden müssen sondern die Blasform bereits in montagefertigem Zustand vorliegt und gegebenenfalls auch automatisch in die Maschinen eingebaut werden kann.

Insbesondere werden dabei die Blasformen isoliert das heißt in einem arbeitsunfähigen Zustand und insbesondere ohne Formträger aufbewahrt. Wie erwähnt, kann dabei die Blasform in ihrer Gesamtheit in einem Aufnahmemittel untergebracht sein oder aber die Bestandteile der Blasform können in unterschiedlichen Aufnahmemitteln angeordnet sein.

Vorteilhaft ist die Magazinvorrichtung derart ausgebildet, dass die Blasformen enger beabstandet sind als im Falle einer Blasmaschine an der sie im normalen Arbeitsbetrieb angeordnet sind.

Üblicherweise werden die Blasformen vollständig zusammengesetzt also mit Seitenteilen und Bodenteilen in den Aufnahmemitteln bzw. an den Haltemitteln angeordnet. Dabei können Aufnahmemittel vorgesehen sein, welche zur separaten Aufnahme der Seitenteile und des Bodens verwendbar sind.

Vorteilhaft sind die Aufnahmemittel an Aufnahmemittel einer Vorrichtung zum Umformen von Kunststoffvorformlingen zu Kunststoffbehältnissen angepasst in der sich die Blasformen in einem Arbeitsbetrieb dieser Vorrichtung befinden. In diesem Falle ist es möglich, dass die Blasformen in einem noch zusammengesetzten Zustand aus der Vorrichtung zum Umformen von Kunststoffvorformlingen zu Kunststoffbehältnissen entnommen werden was ebenfalls bislang im Stand der Technik unbekannt ist. So könnten die Aufnahmemittel der Magazinvorrichtung und der Blasmaschine gleichartig ausgebildet sein und so beispielsweise in gleicher Weise mit den Blasformen in Verbindung stehen. Es wäre jedoch auch möglich dass die Aufnahmemittel der Magazinvorrichtung lediglich in der Weise auf die Aufnahmemittel der Blasmaschine angepasst sind, dass die gleichen Blasformen sowohl von den Aufnahme- bzw. Haltemitteln der Blasmaschine als auch von den Aufnahme- bzw. Haltemitteln der Magazinvorrichtung gehalten bzw. aufgenommen werden können.

So können beispielsweise die Aufnahmemittel in gleichen Weisen ausgebildet werden wie ähnliche Haltemittel, an denen die Blasformen im Arbeitsbetrieb angeordnet sind. Es wäre jedoch auch möglich, dass die Anpassung so ausgebildet ist, dass sie lediglich sicher stellt, dass die Blasformen ohne zusätzliche Adapterelemente in der Magazinvorrichtung untergebracht werden können, also beispielsweise Greifelemente oder dergleichen vorgesehen sind.

Es könnte jedoch auch bewusst ein Adapterstück vorgesehen sein, welches bei der Demontage der Blasformen an dieser oder in diese eingesetzt wird und an dem die Blasformen an den Aufnahmemitteln angeordnet werden.

Bei einer weiteren vorteilhaften Ausführungsform weist die Magazinvorrichtung eine Transporteinrichtung zum Transportieren der Blasformen auf. Vorteilhaft transportiert die Transporteinrichtung die Blasformen vereinzelt. Bei einer weiteren vorteilhaften Ausführungsform transportiert die Transporteinrichtung die Blasformen liegend bzw. derart, dass deren Längsachse im Wesentlichen horizontal verläuft. Vorteilhaft transportiert die Transporteinrichtung die Blasformen entlang einer geschlossenen Bahn.

Bei einer weiteren vorteilhaften Ausführungsform weist die Reinigungseinrichtung ein erstes Reinigungselement auf, welches die Blasformen in einer ersten vorgegebenen Weise reinigt. Unter einem Reinigen der Blasformen wird dabei jeder Vorgang verstanden, der einen Reinheitsgrad der Blasformen erhöht, wie beispielsweise ein Spülen, Putzen, Polieren, Desinfizieren, Sterilisieren und dergleichen.

Vorteilhaft ist das Reinigungselement stationär gegenüber einer Bewegungsrichtung der Blasformen angeordnet. Dies bedeutet, dass die Blasformen von der Transporteinrichtung in einer bestimmten Bewegungsrichtung beispielsweise auf einer Kreisbahn oder auf einer ovalen Bahn bewegt werden und das Reinigungselement entlang dieser Transportbahn stationär angeordnet ist.

Vorteilhaft ist das Reinigungselement jedoch in einer Bewegungsrichtung bewegbar, welche von der Transportrichtung der Blasformen abweicht. So ist es beispielsweise möglich, dass die Blasformen entlang einer kreisförmigen Bahn bewegt werden und das Reinigungselement senkrecht zu dieser Kreisbahn beweglich ist, um auf diese Weise mehrere von übereinander angeordneten Reihen von Blasformen reinigen zu können.

Daneben ist es auch möglich, dass wenigstens ein Reinigungselement in einer Längsrichtung der Blasformen bewegbar ist. Auf diese Weise kann das Reinigungselement in das Innere der Blasform eingeschoben werden, um so einen Reinigungsvorgang durchführen zu können. Damit ist vorteilhaft wenigstens ein Reinigungselement in zwei unterschiedlichen Richtungen bewegbar und besonders bevorzugt in zwei im Wesentlichen zueinander senkrecht stehenden Richtungen.

Bei einer weiteren vorteilhaften Ausführungsform weist die Magazinvorrichtung ein Gehäuse auf, welches die Blasform im Wesentlichen vollständig von der Umgebung abtrennt. In dieser Ausführungsform eignet sich die Magazinvorrichtung auch zum Sterilisieren der Blasform bzw. zum Behandeln der Blasform unter aseptischen Bedingungen. Dabei ist es möglich, dass das Reinigungselement beispielsweise in eine Wandung des Gehäuses integriert ist und gemeinsam mit dieser Wandung bewegt wird, so dass die Wandung selbst luftdicht bleibt und daher keine unsterile Luft in das Gehäuse eindringen kann.

Bei einer weiteren vorteilhaften Ausführungsform transportiert die Transporteinrichtung die Blasformen getaktet. So ist es möglich, dass eine bestimmte Blasform sukzessive beispielsweise von einem ersten Reinigungselement zu einem zweiten und ausgehend von diesem zweiten Reinigungselement zu einem dritten Reinigungselement transportiert werden kann.

Bei einer weiteren vorteilhaften Ausführungsform weist die Magazinvorrichtung ein zweites Reinigungselement auf, welches die Blasformen reinigt. So ist es möglich, dass die Blasformen in zwei oder mehreren aufeinander folgenden Schritten in unterschiedlicher Weise gereinigt werden, beispielsweise in einem ersten Reinigungsschritt mit Wasser beaufschlagt werden, in einem zweiten Reinigungsschritt mit einer Bürste beaufschlagt werden, in einem weiteren Schritt eine Klarspülung erfolgt, in einem weiteren Schritt die Blasformen mit Luft bzw. Sterilluft getrocknet werden und schließlich ein Desinfizieren oder Sterilisieren durchgeführt wird.

Bei einer weiteren vorteilhaften Ausführungsform ist dieses zweite Reinigungselement entlang des Transportpfades der Blasform hinter dem ersten Reinigungselement angeordnet, um auf diese Weise, wie erwähnt, eine sukzessive Reinigung der Blasformen durchzuführen.

Bei einer weiteren vorteilhaften Ausführungsform weist die Reinigungseinrichtung eine Sterilisationseinheit zum Sterilisieren der Blasformen auf. Diese Ausführungsform eignet sich insbesondere für aseptische Anwendungen bzw. solche Anwendungen, in denen die Blasformen unter Sterilbedingungen gereinigt werden müssen. Vorzugsweise beaufschlagt die Sterilisationseinrichtung die Blasformen mit einem Reinigungsmedium wie beispielsweise Wasserstoffperoxid oder Peressigsäure. Es wäre jedoch auch möglich, dass die Sterilisationseinrichtung Strahlen wie beispielsweise UV- Licht oder Elektronenstrahlen auf die Blasformen aussendet.

Vorteilhaft ist wenigstens ein Reinigungselement derart ausgeführt, dass es eine Innenwandung der Blasformen behandelt. So ist es beispielsweise möglich, dass die Reinigungseinrichtung in Form eines Sprühkopfes durch eine Halsöffnung der Blasform in deren Inneres eingeführt wird um so die Innenwandung der Blasformen zu benetzen. Auch könnte ein Bürstenkopf in das Innere der Blasform eingeführt werden. Es wäre jedoch auch möglich, dass zu diesem Zweck das Bodenteil der Blasformen von den Blasformen getrennt in die Magazinvorrichtung aufgenommen wird, so dass separat eine Reinigung des Bodenteils und eine Reinigung der beiden Seitenteile und dabei jeweils der Innenwandungen durchgeführt werden kann. Es wäre jedoch auch möglich, dass die Blasform derart in der Magazinvorrichtung aufgenommen wird, dass sie einen abgeschlossenen Hohlraum bildet, um auf diese Weise mit dem Reinigungsmittel beaufschlagt werden zu können.

Die vorliegende Erfindung ist weiterhin auf ein Verfahren zur Lagerung von Blasformen gerichtet, welche zur Umformung von Kunststoffvorformlingen zu Kunststoffbehältnissen dienen.

Dabei werden die Blasformen von der Vorrichtung zum Umformen von Kunststoffvorformlingen zu Kunststoffbehältnissen entnommen und in der Magazinvorrichtung angeordnet, wobei die Blasformen in der Magazinvorrichtung wenigstens teilweise gereinigt werden.

Bevorzugt werden die Blasformen in der Magazinvorrichtung mittels einer Transporteinrichtung transportiert. Besonders bevorzugt werden die Blasformen in der Magazinvorrichtung getaktet transportiert. Weiterhin wird bevorzugt eine Reinigung der Blasformen innerhalb der Vorrichtung in mehreren Reinigungsschritten vorgenommen. Vorzugsweise werden die Blasformen wenigstens teilweise automatisiert gereinigt. Die Reinigung erfolgt während sich die Blasformen in einem Lagerungszustand in der Magazinvorrichtung befinden.

Bei einem weiteren bevorzugten Verfahren wird dieser Reinigungsvorgang automatisch durchgeführt.

Weitere Vorteile und Ausführungsformen ergeben sich aus den beigefügten Zeichnungen:

Darin zeigen:
- Fig. 1a - 1b: eine erfindungsgemäße Magazinvorrichtung in einer ersten Ausführungsform;
- Fig. 2: eine schematische Darstellung einer erfindungungsgemäßen Magazinvorrichtung;
- Fig. 3: eine weitere schematische Darstellung einer erfindungsgemäßen Magazinvorrichtung;
- Fig. 4: eine perspektivische Darstellung einer erfindungsgemäßen Magazinvorrichtung in einer ersten Ausführungsform;
- Fig. 5: eine Seitenansicht der Magazinvorrichtung aus Fig. 4;
- Fig. 6: eine weitere Seitenansicht der Magazinvorrichtung aus. Fig. 4;
- Fig. 7: eine Teilansicht der Magazinvorrichtung aus Fig. 4;
- Fig. 8: eine weitere Ausführungsform einer erfindungsgemäßen Magazinvorrichtung;
- Fig. 9: eine weitere Ansicht der Magazinvorrichtung aus Fig. 8;
- Fig. 10: eine weitere Ansicht der Magazinvorrichtung aus Fig. 8;
- Fig. 11: eine perspektivische und teilweise geöffnete Ansicht der Magazinvorrichtung aus Fig. 8;
- Fig. 12: eine weitere Ansicht der Magazinvorrichtung aus Fig. 8; und
- Fig. 13: eine Detailansicht der Magazinvorrichtung aus Fig. 8.

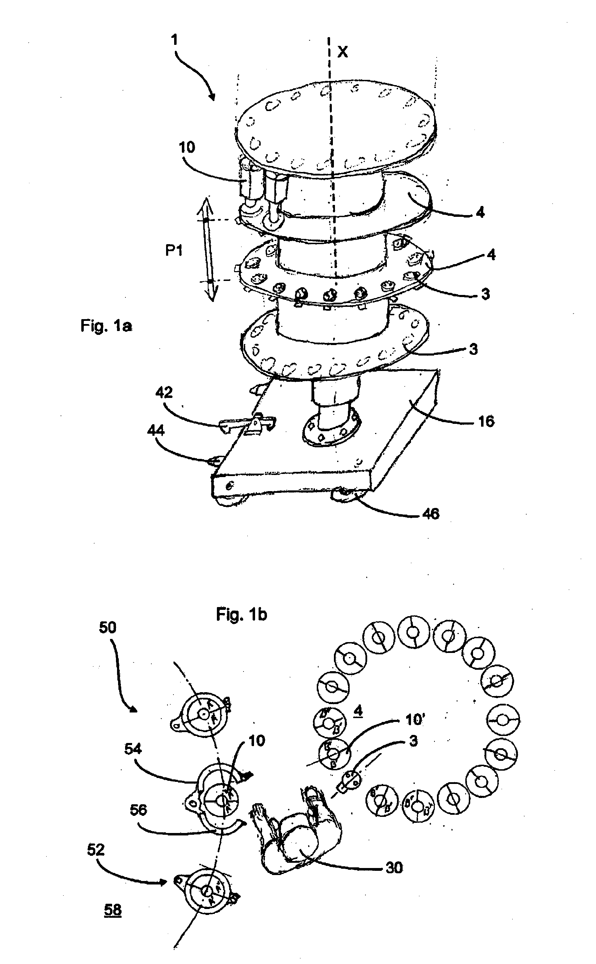

Fig. 1a zeigt eine vereinfachte Darstellung einer erfindungsgemäßen Magazinvorrichtung 1. In dieser Magazinvorrichtung ist eine Vielzahl von Aufnahmemitteln 3 vorgesehen, die hier jeweils an einer Trägereinrichtung 4 in Form einer Scheibe oder Platte angeordnet sind. Man erkennt, dass die Blasformen 10 in einem zusammengesetzten Zustand in der Magazinvorrichtung 1 aufgenommen werden.

Die einzelnen Aufnahmemittel 3 sind hier in Umfangsrichtung insbesondere gleichmäßig auf der Trägereinrichtung 4 angeordnet. Weiterhin ist es möglich, dass mehrere Trägereinrichtungen 4 vorgesehen sind, die beispielsweise auch gemeinsam oder unabhängig voneinander insbesondere jedoch gemeinsam in Richtung des Pfeils P1 verschiebbar sind. Auf diese Weise kann die Magazinvorrichtung zur Aufnahme mehrerer Sätze von Blasformen 10 oder auch höherer Stückzahlen von Blasformen dienen.

Weiterhin sind die einzelnen Trägereinrichtungen um eine gemeinsame Drehachse X drehbar. Die Trägereinrichtungen 4 bzw. auch die einzelnen Aufnahmemittel sind daher beweglich gegenüber einem Gestell 16 angeordnet. Das Bezugszeichen 42 bezieht sich auf eine Verbindungseinrichtung wie einen Haken, mit dem die Magazinvorrichtung beispielsweise mechanisch mit einer Blasformmaschine verbunden werden kann.

Die Bezugszeichen 44 bezieht sich auf Anschlüsse, insbesondere elektrische Anschlüsse, mit denen die Magazinvorrichtung 1 an eine Blasmaschine angebunden werden kann. Genauer gesagt handelt es sich bei der in Fig. 1a gezeigten Vorrichtung um ein Rundmagazin, welches hier eine Vielzahl von Aufnahmemitteln aufweist, welche in gleicher Weise gestaltet sind wie entsprechende Aufnahmemittel einer Vorrichtung zum Umformen von Kunststoffvorformlingen zu Kunststoffbehältnissen.

Die Teilung der einzelnen Aufnahmemittel 3 bzw. auch der Blasformen ist hier geringer als bei der Blasmaschine, so dass die Magazinvorrichtung vorteilhaft einen Durchmesser aufweist, der zwischen 1 m und 3 m, bevorzugt zwischen 1 m und 2 m liegt. Im Betrieb weist Magazinvorrichtung 1 bevorzugt ein Aufnahmemittel mehr auf als die ihr zugeordnete Blasmaschine, so dass auch die erste von der Blasmaschine entnommene Form platziert werden kann. Wie ausgeführt kann die Magazinvorrichtung mit einem Blasmaschinenkarussell teilungsweise weiter getaktet werden. Mittels Rolleinrichtungen 46 ist die Magazinvorrichtung 19 beweglich ausgeführt und kann an eine Blasmaschine zum automatischen Entnehmen der Blasformen angedockt werden.

Fig. 1b zeigt eine schematische Darstellung zur Veranschaulichung der Funktionsweise der Magazinvorrichtung. Hier ist auch eine Vorrichtung zum Umformen von Kunststoffvorformlingen für Kunststoffbehältnissen bzw. Blasmaschine 50 vorgesehen, wobei diese Blasmaschine 50 eine Vielzahl von Blasformträgern 52 aufweist, welche sich jeweils aus zwei Seitenteilen 54 und 56 zusammensetzen. Diese beiden Seitenteile 54, 56 nehmen dabei die Blasform 10 zwischen sich auf. Bei einem Blasformwechsel werden zunächst die beiden Seitenteilen 54 und 56 von der Blasform 10 getrennt und anschließend die Blasform 10 in einem in Figur 1b gezeigten zusammengesetzten Zustand entnommen. Dies kann, wie in Fig. 1b gezeigt auch manuell durch einen Benutzer 30 erfolgen. Diese Blasform 10 kann anschließend auf das hier noch freie Aufnahmemittel 3 gesetzt werden. Entsprechend kann eine neue Blasform 10' der Magazinvorrichtung entnommen werden und in den nunmehr freien Platz der Blasmaschine 50 eingesetzt werden. Das Bezugszeichen 58 kennzeichnet ein Blasrad an dem eine Vielzahl von Blasstationen bzw. Blasformträgern 52 angeordnet ist.

In einer bevorzugten Ausführungsform ist es möglich, die Magazinvorrichtung mit einer entsprechenden Blasmaschine zu synchronisieren so dass die Entnahme der Blasform vollautomatisch ablaufen kann.

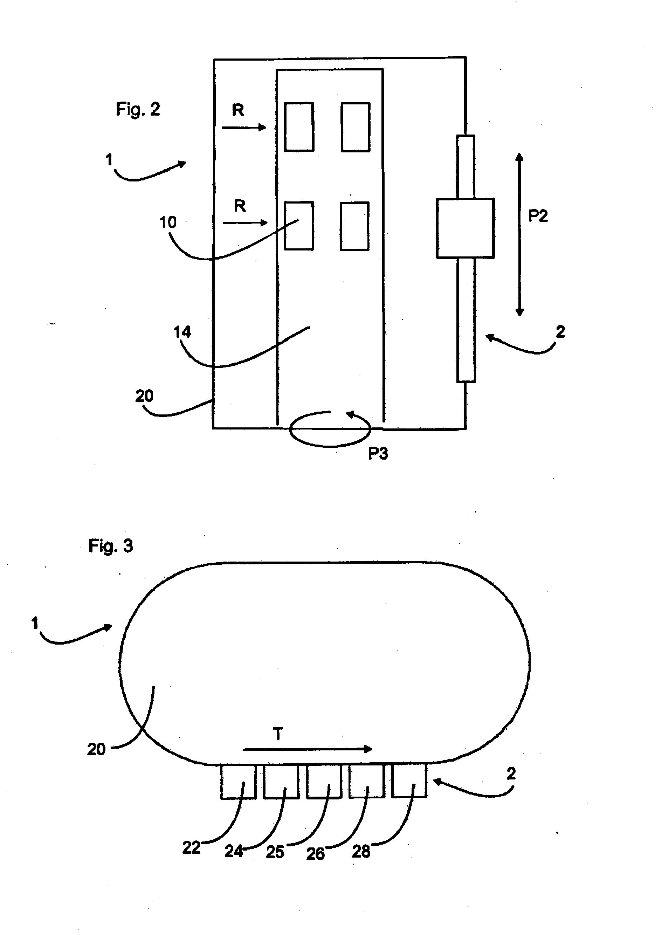

Fig. 2 zeigt eine stark schematische Darstellung einer erfindungsgemäßen Magazinvorrichtung. Hier ist ein Träger 14 vorgesehen, der (vgl. Pfeil P3) drehbar ist. Das Bezugszeichen 20 bezieht sich auf ein Gehäuse, welches hier den Träger 14 und die darin angeordneten Blasformen 10 vollständig umgibt. Das Bezugszeichen 2 kennzeichnet in ihrer Gesamtheit eine Reinigungseinrichtung, die zum Reinigen der einzelnen Blasformen 10 bzw. deren Bestandteile dient. Diese Reinigungseinrichtung ist entlang des Pfeils P2, also hier von oben nach unten bewegbar, um mehrere Reihen R von Blasformen reinigen zu können.

Fig. 3 zeigt wiederum eine schematische Darstellung einer erfindungsgemäßen Magazinvorrichtung 1. Man erkennt hier, dass die Reinigungseinheit insgesamt fünf Reinigungselemente 22, 24, 25, 26 und 28 aufweist. Diese unterschiedlichen Reinigungselemente sind hier entlang des Transportpfades T der Blasformen hintereinander angeordnet und erlauben so unterschiedliche Reinigungsschritte. Beispielsweise kann es sich bei dem Reinigungselement 22 um eine oder mehrere Düsen handeln, welche die Blasformen 10 mit Wasser und/oder einem Reinigungsmittel beaufschlagen. Bei dem Reinigungselement 24 kann es sich beispielsweise um eine Bürste handeln, die in das Innere der Blasform eingeführt werden kann, um die Innenwandung zu reinigen bzw. zu polieren.

Das Bezugszeichen 25 kennzeichnet ein weiteres Reinigungselement, welches beispielsweise die Blasformen zur Klarspülung wiederum mit Wasser beaufschlagt. Das Reinigungselement 26 kann beispielsweise eine Luftdüse sein, welche zum Trocknen die Blasform mit Luft und insbesondere mit Sterilluft beaufschlagt. Das Bezugszeichen 28 kennzeichnet ein weiteres Reinigungselement, welches beispielsweise zur Desinfektion bzw. zur Sterilisierung der Blasformen dienen kann.

Innerhalb des Gehäuses 20 (Fig. 1) kann beispielsweise bei aseptischen Anwendungen über eine Sterilluftzuführung bewirkt werden, dass im Inneren des Gehäuses ein höherer Druck herrscht als außerhalb des Gehäuses. Auf diese Weise können dauerhaft Dekontaminationen von außerhalb am Eindringen in das Gehäuse verhindert werden. Auf diese Weise können Blasformen auch unter aseptischen Bedingungen über längere Zeit aufbewahrt werden. Vorteilhaft ist daher das Gehäuse 20 im Wesentlichen gegenüber der Umgebung abgeschlossen und weist besonders bevorzugt eine Zuführung für Luft und insbesondere Sterilluft auf, um das Innere des Gehäuses auf einem höheren Druck zu halten als die Umgebung.

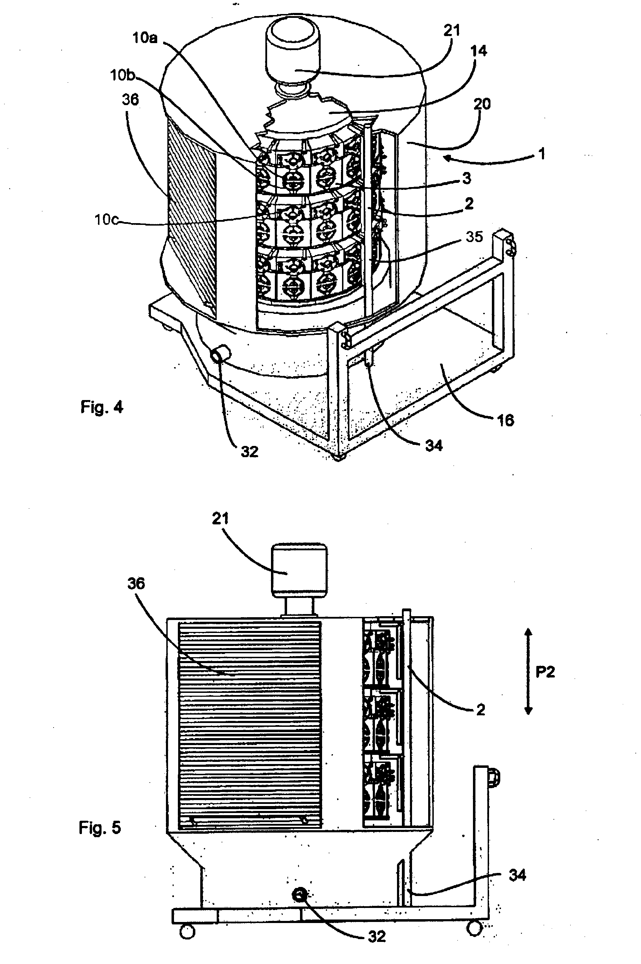

Fig. 4 zeigt eine detailliertere Darstellung einer erfindungsgemäßen Magazinvorrichtung 1. Man erkennt hier, eine Antriebseinrichtung 21 bzw. einen Motor, der den Träger 14, an dem die einzelnen Aufnahmemittel 3 für die Blasformen angeordnet sind, drehen kann. Das Bezugszeichen 2 kennzeichnet wiederum die Reinigungseinrichtung, die zum Reinigen der einzelnen Blasformen dient. Das Bezugszeichen 36 kennzeichnet eine Außenwand des Gehäuses bzw. der Vorrichtung, welche die einzelnen Blasformen von der Umgebung trennt. Die Bezugszeichen 10a und 10b kennzeichnen die beiden Seitenteile der Blasformen 10 und das Bezugszeichen 10c das Bodenteil. Dabei sind sowohl das Bodenteil als auch die Seitenteile derart angeordnet, dass Öffnungen derselben nach außen gewandt sind, so dass ein Reinigungsmittel diese beaufschlagen kann. Das Bezugszeichen 32 kennzeichnet einen Abfluss, über den Reinigungsmedien, die zum Reinigen der Blasformen dienten, abgeführt werden können. Das Bezugszeichen 34 kennzeichnet einen Anschluss für Reinigungsmittel, d. h. über diesen Anschluss und über eine sich daran anschließende Rohrleitung 35 kann ein Reinigungsmedium den einzelnen Blasformen zugeführt werden. Das Bezugszeichen 16 kennzeichnet wiederum Gestell der gesamten Vorrichtung.

Fig. 5 zeigt eine Seitenansicht der in Fig. 4 gezeigten Vorrichtung. Man erkennt hier wiederum die Seitenwand, die hier in der Art einer Jalousie ausgeführt ist und daher beispielsweise nach oben oder nach unten geschoben werden kann um den Zugriff auf die einzelnen Blasformen freizugeben. Auf diese Weise können die einzelnen Blasformen 10 der Magazinvorrichtung entnommen und beispielsweise in eine Blasformmaschine eingebaut werden. Es wäre jedoch auch möglich, dass dieser Vorgang automatisiert wird und die Blasformen automatisch an die Magazinvorrichtung übergeben werden. Vorteilhaft sind die einzelnen Blasformen 10 hier liegend bzw. horizontal in der Magazinvorrichtung angeordnet, um auf diese Weise den Reinigungsvorgang zu vereinfachen. Es wäre jedoch auch möglich, dass die Blasformen vertikal angeordnet sind und beispielsweise ein Reinigungsmittel von unten her auf diese aufgebracht wird.

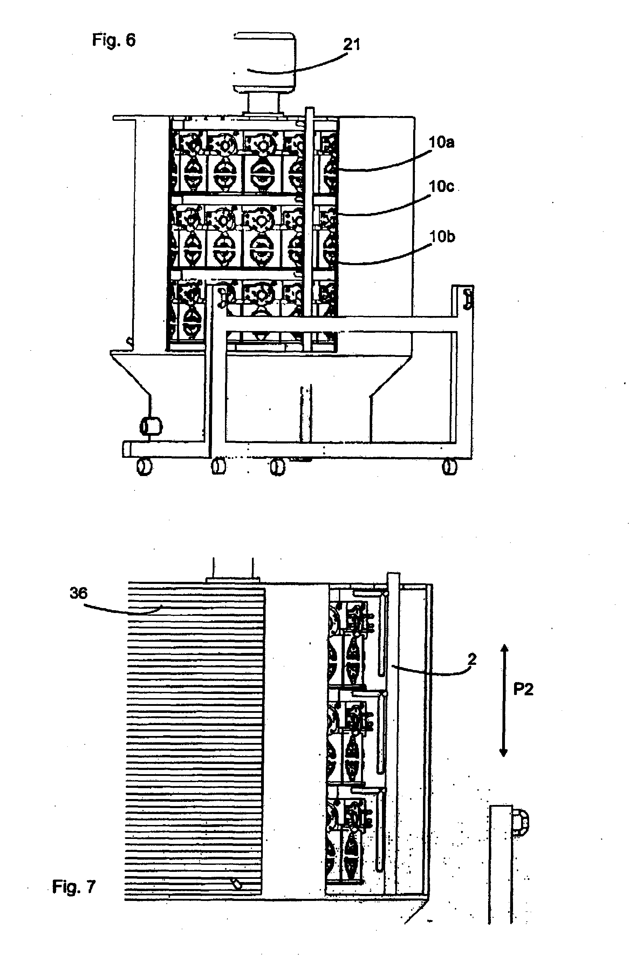

Fig. 6 zeigt eine weitere Darstellung der erfindungsgemäßen Magazinvorrichtung. Man erkennt auch hier wieder, dass die Blasformen übereinander in einzelnen Aufnahmemitteln angeordnet sind, wobei die beiden Seitenteile der Blasform 10a und 10b jeweils aneinander gelegt sind und das Bodenteil 10c darüber angeordnet ist. Die in Fig. 6 gezeigte Anordnung erlaubt eine sehr Platz sparende Unterbringung einer Vielzahl von Blasformen.

Fig. 7 zeigt eine weitere Detaildarstellung der in Fig. 5 gezeigten Magazinvorrichtung 1. Man erkennt hier auch wieder die Reinigungseinrichtung 2, die zum Reinigen der einzelnen Blasformteile dient. Wie oben erwähnt, ist die Reinigungseinrichtung 2 bevorzugt entlang des Pfeils P2 bewegbar. Es wäre jedoch auch möglich, dass eine Vielzahl von Reinigungselementen entlang der Richtung P2 übereinander angeordnet ist, so dass eine getrennte, sukzessive oder simultane Reinigung der einzelnen Blasformteile ermöglicht wird. Es wäre jedoch auch denkbar, dass die Bestandteile der Blasform nebeneinander in den Aufnahmemitteln angeordnet sind.

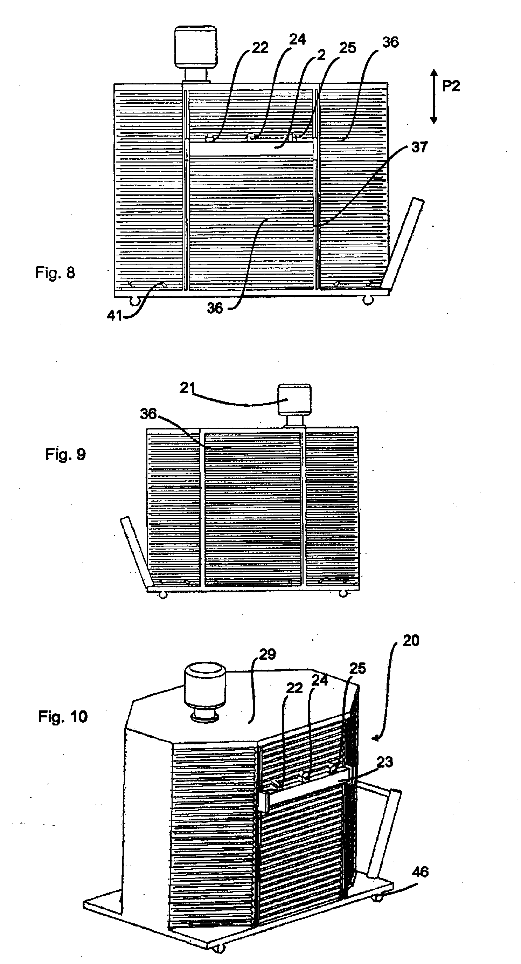

Fig. 8 zeigt eine weitere Ausführungsform einer erfindungsgemäßen Magazinvorrichtung. Während bei in der obigen Ausführungsform veranschaulichten Magazinvorrichtung die Blasformen entlang einer kreisförmigen Bahn gefördert werden, werden bei den nunmehr dargestellten Ausführungsform die Blasformen entlang einer ovalen Bahn, beispielsweise mit Hilfe einer Transportkette, gefördert.

Zu diesem Zweck können zwei Umlenkräder vorgesehen sein und eine zwischen diesen angeordneten Kette, so dass die Blasformen wenigstens abschnittsweise auch entlang einer geradlinigen Bahn gefördert werden. Das Bezugszeichen 2 kennzeichnet auch wieder in ihrer Gesamtheit die Reinigungseinrichtung, an der hier drei Reinigungselemente 22, 24, 25 angeordnet sind. Auch hier ist die Reinigungseinrichtung entlang des Pfeils P2, d. h. nach oben und unten, bewegbar.

Vorzugsweise ist ein (nicht dargestellter) Antrieb, vorgesehen, der diese Bewegung der Reinigungseinrichtung entlang des Pfeils P2 bewirkt. So wäre es beispielsweise möglich, dass eine Drehspindel vorgesehen ist, welche die Bewegung der Reinigungseinrichtung erzeugt. Die Reinigungseinrichtung ist hier in eine Wand 36 integriert und bevorzugt bewegt sich diese Wand 36 bei einer Bewegung der Reinigungseinrichtung 2 mit. Auf diese Weise kann die Wand durchgehend im Wesentlichen luftdicht sein und gleichwohl eine Bewegung der Reinigungseinrichtung entlang des Pfeils P2 ermöglichen. Das Bezugszeichen 37 bezieht sich auf Schienenführungen zum Führen der Reinigungseinrichtung 2.

Das Bezugszeichen 41 kennzeichnet Griffelemente, um die einzelnen Wandabschnitte 36 zu öffnen, um so die Blasformen entnehmen oder einlegen zu können.

Fig. 9 zeigt eine Rückseite der in Fig. 8 gezeigten Magazinvorrichtung. Auch hier sind wieder die Wandabschnitte bzw. Wandungen 36 erkennbar, die jedoch bewegbar zum Zwecke des Öffnens und Schließens sind.

Fig. 10 zeigt eine perspektivische Darstellung der in Fig. 8 gezeigten Magazinvorrichtung. Man erkennt hier eine Traverse 23, an der die Reinigungselemente 22, 24, 25 fest angeordnet sind. Das Bezugszeichen 29 kennzeichnet einen Deckel bzw. eine Abdeckung, mit der das insgesamt mit 20 bezeichnete Gehäuse abgeschlossen werden kann.

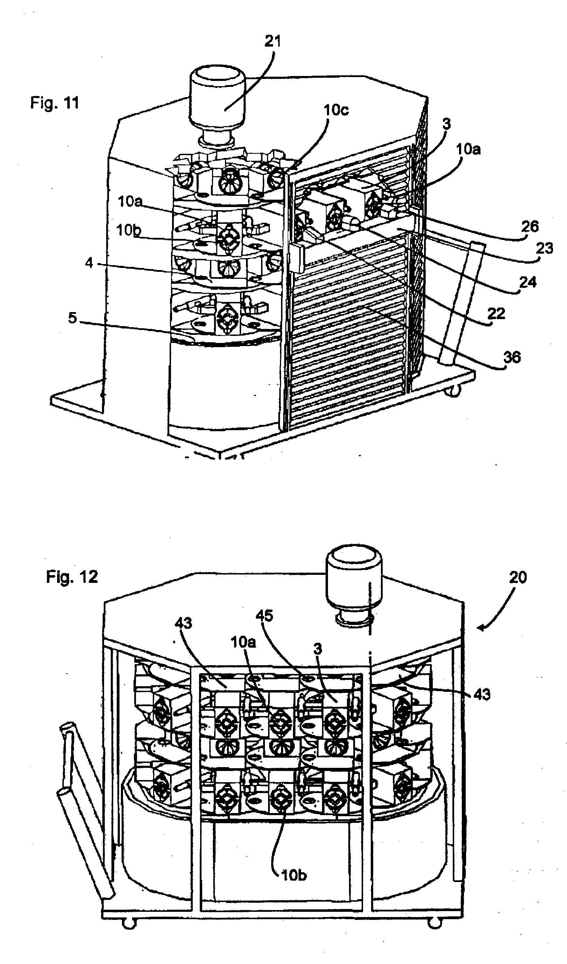

Fig. 11 zeigt einen Blick in das Innere der in Fig. 8 gezeigten Magazinvorrichtung. Man erkennt auch hier wieder die einzelnen Blasformteile 10a, 10b, und 10c, die getrennt voneinander an Aufnahmemitteln angeordnet sind. Das Bezugszeichen 5 kennzeichnet einen Träger, an dem die einzelnen Aufnahmemittel angeordnet sind. Die Antriebseinrichtung 21 dient zum Bewegen der Blasformen. An der Traverse 23 sind wieder die drei Reinigungselemente 22, 24 und 26 angeordnet und man erkennt auch wieder die Aufnahmemittel 3, die zur Aufnahme hier der Blasformseitenteile 10a und 10b dienen. Bei einer Bewegung dieser Traverse 23 bewegt sich, wie oben erwähnt, auch die Wand 36 mit, so dass sie auch während des Reinigungsvorgangs im Wesentlichen geschlossen bleibt.

Fig. 12 zeigte eine weitere Darstellung der in Fig. 8 gezeigten Vorrichtung in einem geöffneten Zustand. Man erkennt hier einzelne Kettenglieder 43, die über Gelenkverbindungen 45 miteinander verbunden sind und an denen hier jeweils die Aufnahmemittel 3 angeordnet sind. Diese Kettenglieder dienen zum Transport der Blasformen innerhalb des Gehäuses 20.

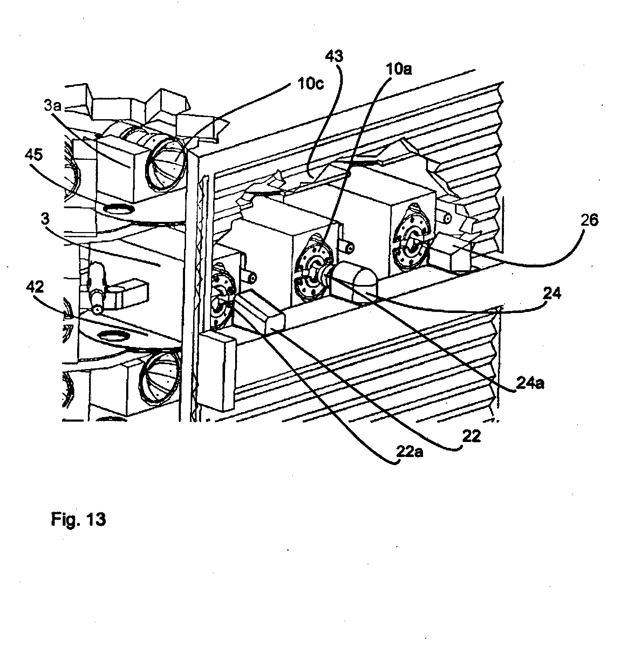

Fig. 13 zeigte eine detaillierte Darstellung der in Fig. 8 gezeigten Vorrichtung. In diesem Fall weist beispielsweise das Reinigungselement 22 eine Düse 22a auf, die in das Innere der Blasformen 10 eindringt und die Innenwandung mit einem Reinigungsmittel beaufschlagt. Dabei kann es sich beispielsweise um eine Kunststoffreinigungsdüse mit einem Drehkopf handeln, der sich bei Austritt des Reinigungsmittels dreht und so eine vollumfängliche Besprühung der Innenwandung der Blasform ermöglicht. Das Reinigungselement 24 weist hier ein Bürstenelement 24a auf, welches ebenfalls in das Innere der Blasformteile einführbar ist. Das Bezugszeichen 26 kann beispielsweise wiederum eine Reinigungsdüse aufweisen, welche die Innenwandung der Blasform mit einem Reinigungsmittel oder auch einem Sterilisationsmittel beaufschlagt. Das Bezugszeichen 3a kennzeichnet hier ein Aufnahmemittel, welches hier insbesondere zur Aufnahme der Bodenteile 10c der Blasform dient.

### Bezugszeichenliste

- 1: Magazinvorrichtung
- 2: Reinigungseinrichtung
- 3: Aufnahmemittel, Haltemittel
- 4, 14: Trägereinrichtung
- 5: Träger
- 6: Halteeinrichtung
- 8: Antriebseinrichtung
- 10, 10': Blasform
- 10a, 10b: Seitenteile der Blasform
- 10c: Bodenteil der Blasform
- 12: Aufnahmemittel in Form von Aufnahmetaschen
- 16: Gestell
- 20: Gehäuse
- 21: Antriebseinrichtung
- 22: erstes Reinigungselement
- 22a: Düse
- 23: Traverse
- 24: zweites Reinigungselement
- 24a: Bürstenelement
- 25, 26, 28: Reinigungselemente
- 29: Deckel
- 30: Benutzer
- 32: Abfluss
- 34: Anschluss
- 35: Rohrleitung
- 36: Außenwand des Gehäuses
- 37: Schienenführung
- 41: Griffelemente
- 42: Verbindungseinrichtung
- 43: Kettenglieder
- 44: Anschlüsse
- 45: Verbindungseinrichtungen, Gelenkverbindungen
- 46: Rolleneinrichtungen
- 50: Blasmaschine, Vorrichtung zum Umformen von Kunststoffvorformlingen
- 52: Blasformträger
- 54, 56: Seitenteile
- 58: Blasrad
- B: Bewegungsrichtung
- P1, P2, P3: Pfeile
- R: Reihen
- T: Transportpfad

## Patentansprüche

1. Magazinvorrichtung (1) zur Aufbewahrung einer Vielzahl von Blasformen (10) außerhalb eines Arbeitsbetriebs der Blasformen (10), welche Blasformen (10) zur Umformung von Kunststoffvorformlingen zu Kunststoffbehältnissen dienen und welche jeweils mehrteilig aufgebaut sind,
**dadurch gekennzeichnet, dass**
die Magazinvorrichtung (1) wenigstens eine Reinigungseinrichtung (2) zum Reinigen wenigstens eines Bereichs der Blasformen (10) in einem Lagerungszustand in der Magazinvorrichtung (1) aufweist.

2. Magazinvorrichtung (1) nach Anspruch 1,
**dadurch gekennzeichnet, dass**
die Magazinvorrichtung (1) eine Vielzahl von Aufnahmemitteln (3, 12) aufweist, um die einzelnen Blasformen getrennt voneinander aufzunehmen.

3. Magazinvorrichtung (1) nach Anspruch 2,
**dadurch gekennzeichnet, dass**
wobei die Aufnahmemittel (3, 12) derart ausgebildet sind, dass die Blasformen (10) vereinzelt von ihnen aufnehmbar sind.

4. Magazinvorrichtung nach wenigstens einem der vorangegangenen Ansprüche,
**dadurch gekennzeichnet, dass**
die Magazinvorrichtung (1) eine Transporteinrichtung zum Transportieren der Blasformen (10) aufweist.

5. Magazinvorrichtung nach wenigstens einem der vorangegangenen Ansprüche,
**dadurch gekennzeichnet, dass**
die Reinigungseinrichtung (2) ein erstes Reinigungselement (22) aufweist, welches die Blasformen (10) in einer ersten vorgegebenen Weise reinigt.

6. Magazinvorrichtung nach Anspruch 6,
**dadurch gekennzeichnet, dass**
das Reinigungselement (22) stationär gegenüber der Bewegungsrichtung der Blasformen (10) angeordnet ist.

7. Magazinvorrichtung nach Anspruch 6,
**dadurch gekennzeichnet, dass**
das Reinigungselement (22) in einer Bewegungsrichtung (P2) bewegbar ist, welche von der Transportrichtung der Blasformen (10) abweicht.

8. Magazinvorrichtung nach wenigstens einem der vorangegangenen Ansprüche,
**dadurch gekennzeichnet, dass**
die Magazinvorrichtung (1) ein Gehäuse (20) aufweist, welches die Blasformen (10) im Wesentlichen vollständig von der Umgebung abtrennt.

9. Magazinvorrichtung nach wenigstens einem der vorangegangenen Ansprüche 4 - 9,
**dadurch gekennzeichnet, dass**
die Transporteinrichtung die Blasformen (10) getaktet transportiert.

10. Magazinvorrichtung nach wenigstens einem der vorangegangenen Ansprüche,
**dadurch gekennzeichnet, dass**
die Magazinvorrichtung ein zweites Reinigungselement (24) aufweist, welches die Blasformen (10) reinigt.

11. Magazinvorrichtung nach Anspruch 11,
**dadurch gekennzeichnet, dass**
das zweite Reinigungselement (24) entlang eines Transportpfades der Blasformen (10) hinter dem ersten Reinigungselement (22) angeordnet ist.

12. Magazinvorrichtung nach wenigstens einem der vorangegangenen Ansprüche,
**dadurch gekennzeichnet, dass**
die Reinigungseinrichtung (2) eine Sterilisationseinheit (26) zum Sterilisieren der Blasformen aufweist

13. Magazinvorrichtung nach wenigstens einem der vorangegangenen Ansprüche,
**dadurch gekennzeichnet, dass**
wenigstens ein Reinigungselement (22, 24, 26) derart ausgeführt ist, dass es eine Innenwandung der Blasformen (10) behandelt.

14. Verfahren zur Lagerung von Blasformen (10), welche zur Umformung von Kunststoffvorformlingen zu Kunststoffbehältnissen dienen,
**dadurch gekennzeichnet, dass**
die Blasformen (10) einer Vorrichtung zum Umformen von Kunststoffvorformlingen zu Kunsttoffbehältnissen entnommen und in der eine Magazinvorrichtung (1) angeordnet werden, wobei die Blasformen (10) in einem Lagerungszustand in der Magazinvorrichtung (1) wenigstens teilweise gereinigt werden.

## Claims

1. Magazine apparatus (1) for storing a large number of blow moulds (10) outside a working mode of the blow moulds (10), which blow moulds (10) serve for transforming plastic preforms into plastic containers and which are in each case composed of multiple parts, **characterised in that** the magazine apparatus (1) comprises at least one cleaning device (2) for cleaning at least one region of the blow moulds (10) in a storing state in the magazine apparatus (1).

2. Magazine apparatus (1) according to claim 1, **characterised in that** the magazine apparatus (1) comprises a large number of holding means (3, 12) for holding the individual blow moulds separately from one another.

3. Magazine apparatus (1) according to claim 2, **characterised in that** the holding means (3, 12) are designed in such a way that the blow moulds (10) can be received individually by said holding means.

4. Magazine apparatus according to at least one of the preceding claims, **characterised in that** the magazine apparatus (1) comprises a transport device for transporting the blow moulds (10).

5. Magazine apparatus according to at least one of the preceding claims, **characterised in that** the cleaning device (2) comprises a first cleaning element (22) which cleans the blow moulds (10) in a first predefined manner.

6. Magazine apparatus according to claim 5, **characterised in that** the cleaning element (22) is arranged in a stationary manner relative to the movement direction of the blow moulds (10).

7. Magazine apparatus according to claim 6, **characterised in that** the cleaning element (22) is movable in a movement direction (P2) which differs from the transport direction of the blow moulds (10).

8. Magazine apparatus according to at least one of the preceding claims, **characterised in that** the magazine apparatus (1) comprises a housing (20) which substantially completely isolates the blow moulds (10) from the surrounding environment.

9. Magazine apparatus according to at least one of the preceding claims 4 - 8, **characterised in that** the transport device transports the blow moulds (10) in cycles.

10. Magazine apparatus according to at least one of the preceding claims, **characterised in that** the magazine apparatus comprises a second cleaning element (24) which cleans the blow moulds (10).

11. Magazine apparatus according to claim 10, **characterised in that** the second cleaning element (24) is arranged behind the first cleaning element (22) along a transport path of the blow moulds (10).

12. Magazine apparatus according to at least one of the preceding claims, **characterised in that** the cleaning device (2) comprises a sterilising unit (26) for sterilising the blow moulds.

13. Magazine apparatus according to at least one of the preceding claims, **characterised in that** at least one cleaning element (22, 24, 26) is designed in such a way that it treats an inner wall of the blow moulds (10).

14. Method for storing blow moulds (10) which serve for transforming plastics material preforms into plastics material containers, **characterised in that** the blow moulds (10) are removed from an apparatus for transforming plastics material preforms into plastics material containers and are arranged in the a magazine device (1), wherein the blow moulds (10) are at least partially cleaned in the magazine device (1) in a storing state.

## Revendications

1. Dispositif de magasin (1) pour le stockage d'une pluralité de moules de soufflage (10), lesdits moules de soufflage (10) n'étant pas en état de fonctionnement, lesdits moules de soufflage (10) étant prévus pour la transformation de préformes en matière plastique en récipients en matière plastique et présentant chacun une structure en plusieurs parties,
**caractérisé en ce que**
ledit dispositif de magasin (1) comporte au moins un dispositif de nettoyage (2) pour le nettoyage d'au moins une partie des moules de soufflage (10) en état de stockage dans le système de magasin (1).

2. Dispositif de magasin (1) selon la revendication 1,
**caractérisé en ce que**
ledit système de magasin (1) comporte une pluralité de moyens de réception (3, 12) permettant de loger les différents moules de soufflage séparément les uns des autres.

3. Dispositif de magasin (1) selon la revendication 2,
**caractérisé en ce que**
les moyens de réception (3, 12) sont réalisés de manière à permettre la réception par chacun d'un moule de soufflage (10) isolé.

4. Dispositif de magasin selon au moins une des revendications précédentes,
**caractérisé en ce que**
ledit système de magasin (1) comporte un dispositif de transport pour le convoyage des moules de soufflage (10).

5. Dispositif de magasin selon au moins une des revendications précédentes,
**caractérisé en ce que**
l'installation de nettoyage (2) comporte un premier élément de nettoyage (22) qui nettoie les moules de soufflage (10) d'une première manière définie.

6. Dispositif de magasin selon la revendication 5,
**caractérisé en ce que**
l'élément de nettoyage (22) est disposé fixement par rapport à la direction de déplacement des moules de soufflage (10).

7. Dispositif de magasin selon la revendication 6,
**caractérisé en ce que**
l'élément de nettoyage (22) est déplaçable dans une direction de déplacement (P2) qui diffère de la direction de transport des moules de soufflage (10).

8. Dispositif de magasin selon au moins une des revendications précédentes,
**caractérisé en ce que**
ledit système de magasin (1) comporte un carter (20) qui isole à peu près totalement les moules de soufflage (10) de l'environnement.

9. Dispositif de magasin selon au moins une des revendications 4 à 8,
**caractérisé en ce que**
le dispositif de transport convoie les moules de soufflage (10) de manière cyclique.

10. Dispositif de magasin selon au moins une des revendications précédentes,
**caractérisé en ce que**
ledit système de magasin comporte un deuxième élément de nettoyage (24) qui nettoie les moules de soufflage (10).

11. Dispositif de magasin selon la revendication 10,
**caractérisé en ce que**
le deuxième élément de nettoyage (24) est disposé en aval du premier élément de nettoyage (22) le long d' un chemin de transport des moules de soufflage (10).

12. Dispositif de magasin selon au moins une des revendications précédentes,
**caractérisé en ce que**
l'installation de nettoyage (2) comporte une unité de stérilisation (26) pour la stérilisation des moules de soufflage.

13. Dispositif de magasin selon au moins une des revendications précédentes,
**caractérisé en ce qu'**
au moins un élément de nettoyage (22, 24, 26) est réalisé de manière à traiter une paroi intérieure des moules de soufflage (10).

14. Procédé de stockage de moules de soufflage (10) prévus pour la transformation de préformes en matière plastique en récipients en matière plastique,
**caractérisé en ce que**
les moules de soufflage (10) sont prélevés d'un dispositif de transformation de préformes en matière plastique en récipients en matière plastique et mis en place dans un dispositif de magasin (1), les moules de soufflage (10) étant au moins partiellement nettoyés en état de stockage dans le dispositif de magasin (1).
